# EUROPEAN PATENT APPLICATION

(11) **EP 4 071 971 A1**
(43) Date of publication of application: **12.10.2022**
(21) Application number: 22163951.1
(22) Date of filing: 23.03.2022
(51) Int. Cl.: H02K 1/02, H02K 1/14, H02K 1/18, H02K 15/02

(54) **AXIAL GAP MOTOR STATOR CORE AND AXIAL GAP MOTOR STATOR CORE MANUFACTURING METHOD**

(30) Priority: 05.04.2021 JP 2021064333
(71) Applicant: Hirai, Yoshiki, Tokyo 105-0031 (JP); Hirai-HPM Co., Ltd., Tokyo 150-0031 (JP)
(72) Inventor: HIRAI, Yoshiki, Tokyo 150-0031 (JP)
(74) Representative: Gill Jennings & Every LLP

(57) **Abstract**

An axial gap motor stator core includes a yoke portion made up of a metallic plate member or the like and including a lock portion and a tooth portion constituting a dust core including a lower surface which is a locking target to be locked on the lock portion. An axial gap motor stator core manufacturing method includes forming a yoke portion including a plurality of lock portions, which are projecting portions, by pressing, for example, a metallic plate member and fixing the tooth portion to the yoke portion by inserting the lock portions into the tooth portion.

## Description

### Field of the Invention

The present invention relates to an axial gap motor stator core and an axial gap motor stator core manufacturing method.

### BACKGROUND

In recent years, there have been proposed axial gap motors which can realize both a thin thickness and a high torque output in a compatible fashion. An axial gap motor has a structure in which a circular disc-shaped stator and a circular disc-shaped rotor are superposed on each other in an axial direction of a rotational shaft. A stator core (an axial gap motor stator core) making up the stator of the axial gap motor includes an annular yoke portion and a tooth portion having substantially fan-shaped upper and lower surfaces. An axial air gap motor stator core disclosed in Japanese Patent No. 6228633 is made up of a dust core which is formed by compression molding soft magnetic powder in such a manner that a yoke portion and a tooth portion are integrated thereinto.

In the case that a circular disc-shaped yoke portion and a tooth portion, which projects from the yoke portion, are formed integrally as a single dust core, a large magnitude of load is necessary for compression molding, and this requires large manufacturing equipment such as a mold, a press as a pressing device, and the like.

### SUMMARY OF THE INVENTION

An object of the present invention is to provide an axial gap motor stator core which can be manufactured only with small manufacturing equipment and an axial gap motor stator core manufacturing method.

According to a first aspect of the present invention, there is provided an axial gap motor stator core including a yoke portion including a lock portion on a surface of at least one of sides thereof and a tooth portion constituting a dust core configured to be locked on the lock portion.

According to a second aspect of the present invention, there is provided an axial gap motor stator core manufacturing method including forming a yoke portion including a plurality of projecting portions, and fixing a tooth portion, constituting a dust core having a flat plane-shaped lower surface, to the yoke portion by inserting the projecting portions into the lower surface of the tooth portion.

According to the aspects of the present invention, there can be provided the axial gap motor stator core which can be manufactured only with small manufacturing equipment and the axial gap motor stator core manufacturing method.

### BRIEF DESCRIPTION OF THE DRAWINGS

Examples of axial gap motor stator cores and axial gap motor stator core manufacturing methods in accordance with embodiments of the invention will now be described with reference to the accompanying drawings, in which:
FIG. 1 is a plan view of an axial gap motor stator core according to an embodiment of the present invention; and
FIG. 2 is an enlarged sectional view of the axial gap motor stator core according to the embodiment of the present invention, which is taken along a line or plane II-II shown in FIG. 1

### DETAILED DESCRIPTION

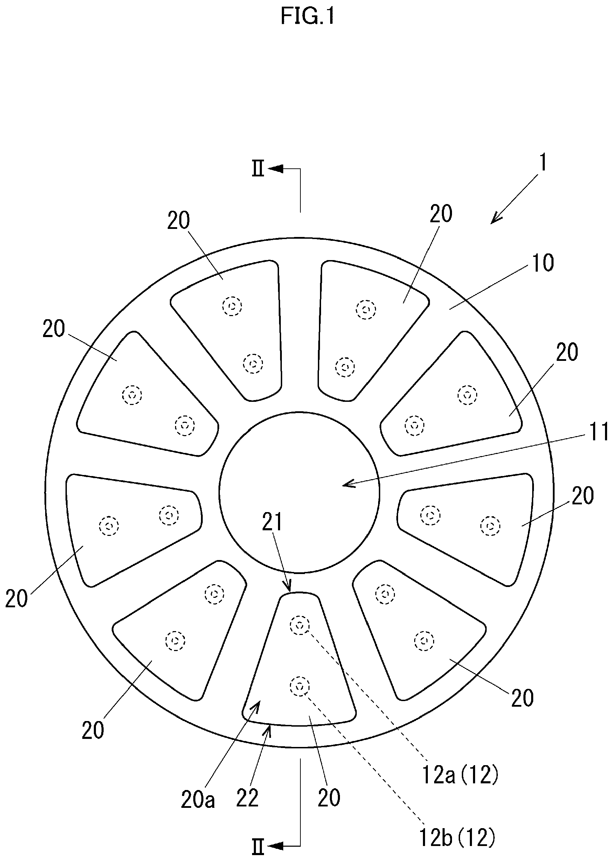

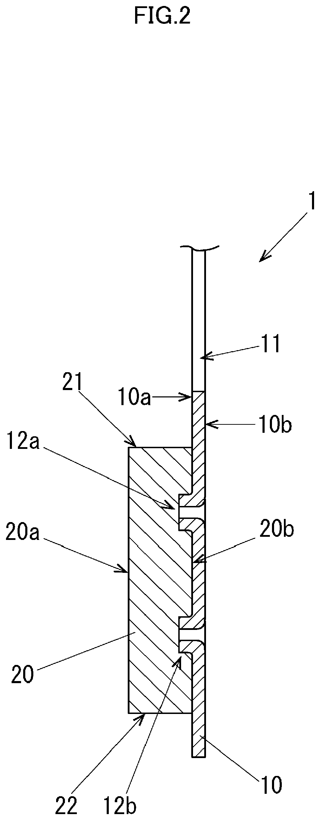

Hereinafter, an embodiment of the present invention will be described based on drawings. An axial gap motor stator core 1 shown in FIGs. 1 and 2 has an annular yoke portion 10 and a tooth portion 20, which has a fan shape when viewed from above. A center hole 11 in the yoke portion 10 is a hole through which a rotational shaft of an axial gap motor, not shown, is passed. A plurality of tooth portions 20 (nine in this embodiment) are disposed radially at equal intervals around a center of the yoke portion 10.

The yoke portion 10 is formed of metal plate material. A lock portion 12, which acts as a substantially cylindrical projecting portion, is provided at a portion on the yoke portion 10 where the tooth portion 20 is to be disposed in such a manner as to be positioned on a center line of the tooth portion 20. In the present embodiment, two lock portions 12 are provided on the yoke portion 10 for each of the tooth portions 20. Specifically speaking, a radially inner lock portion 12a and a radially outer lock portion 12b are provided at a predetermined interval at the portion on the yoke portion 10 in such a manner as to be spaced apart from each other in a radial direction of the yoke portion 10.

The tooth portion 20 has an upper surface 20a and a lower surface 20b each having a substantially fan shape. More specifically speaking, a distal or front end portion 21 and a rear end portion 22 of the tooth portion 20 each have a substantially circular arc portion, and respective corner portions of the front end portion 21 and the rear end portion 22 each have an angularly rounded shape. The upper surface 20a and the lower surface 20b each have a substantially flat plane-like shape, and the lower surface 20b is formed as an abutment surface which is brought into abutment with an upper surface 10a of the yoke portion 10. A coil winding, not shown, is wound around an outer circumference of the tooth portion 20, whereby an axial gap motor stator core is formed.

The tooth portion 20 is formed as a dust core by using a known manufacturing method. Here, the dust core is formed by filling soft magnetic powder whose surface is coated with an extremely thin insulating film in a cavity and pressing the soft magnetic powder so filled with a punch. The soft magnetic powder is powder made of soft magnetic material and is made up of a plurality of particles. Pure iron, which has high saturation magnetic flux density and superior plastic deformability exhibited when pressed, and iron-based alloys such as Sendust, silicon steel, permalloy, and the like are used to form the soft magnetic powder.

The axial gap motor stator core 1 is formed by executing the following three steps. That is, a first step is a step of forming a yoke portion 10. In this step, a metallic plate member is pressed to form a plurality of lock portions 12a, 12b, which each act as a projecting portion. The lock portions 12a, 12b can be formed by punching halfway portions on the metallic plate member where small holes are opened in advance from a side which constitutes a lower surface 10b of the yoke portion 10 with a punch. The yoke portion 10 can be formed through a progressive press processing using a press; specifically speaking, the lock portions 12 are formed on the metallic plate member, and thereafter, the metallic plate member is punched out into an annular shape to thereby form the annular yoke portion 10.

A second step is a step of forming the tooth portion 20. In this step, a tooth portion 20 is formed separately from the "step of forming a yoke portion 10". The tooth portion 20 is made up of the dust core as described above.

A third step is a step of fixing the tooth portion 20 to the yoke portion 10. In this step, the lock portions 12a, 12b (the projecting portions) are inserted into the lower surface 20b of the tooth portion 20 so as to fix the tooth portion 20 to the yoke portion 10. Here, an adhesive may be applied to an abutment surface between the tooth portion 20 and the yoke portion 10 (in other words, the upper surface 10a of the yoke portion 10 which corresponds to the lower surface 20b of the tooth portion 20).

In this way, the yoke portion 10 and the tooth portion 20 are formed separately, and the tooth portion 20 is assembled to the yoke portion 10. As a result, when compared with a case in which both the tooth portion 20 and the yoke portion 10 are formed integrally into a single dust core, manufacturing equipment for forming a dust core such as a mold, a press as a pressing device, and the like can be made smaller in size. The tooth portion 20 has no portion where a flange or the like is formed and, hence, the shape of the tooth portion 20 facilitates compression molding. As a result, the mold, the press, and the like for use for compression molding can be made small in size, thereby making it possible to reduce the manufacturing costs including the fitment of such equipment.

While the embodiment of the present invention has been described heretofore, the invention is not limited by the embodiment in any way, and hence, the invention can be carried out with various modifications. For example, the projecting lock portion 12 may be formed as a depressed portion (a projecting portion on the upper surface 10a side) with no hole by pressing the metallic plate member from the lower surface 10b side without forming the small hole (through hole) in advance. In addition, a depressed portion or a hole portion into which the lock portion 12 fits may be formed or an aligning depressed portion with the lock portion 12 may be formed at the portion on the tooth portion 20 where the lock portion 12 is to be inserted. That is, various types of locking modes can be adopted as long as the tooth portion 20 can be brought into locking engagement with the lock portion 12 on the yoke portion 10. Alternatively, since the tooth portion 20 is disposed on an upper surface of the yoke portion 10, a depressed portion, a mark-off line, or the like which traces an outer edge of the lower surface 20b of the tooth portion 20 can also be formed on the upper surface of the yoke portion 10.

In addition, when forming the yoke portion 10, a plurality of separate members may be formed in advance so as to be assembled together into an annular shape. For example, when considering that the yoke portion 10 is divided radially at an angular interval of 120 degrees around a center of the yoke portion 10, there can be formed three members which make up the yoke portion 10 with each member including three tooth portions 20.

In the present embodiment, while the yoke portion 10 is formed by pressing the metallic plate member, the yoke portion 10 may be formed from resin material by use of injection molding. In addition, non-magnetic material such as ceramics, carbon, or the like can be used to form the yoke portion 10.

The lock portion 12 of the yoke portion 10 only need be formed on at least either the upper surface 10a or the lower surface 10b (the upper surface 20a in the present embodiment) of the yoke portion 10, and hence, for example, the lock portion 12 can also be formed on both the upper surface 10a and the lower surface 10b of the yoke portion 10. In this case, the resulting configuration can provide a dual-type axial gap motor stator core.

In addition to the configuration of the tooth portion 20 described in the present embodiment, a configuration can also be adopted in which a hole portion is provided to reduce the weight of the tooth portion 20, or an undercut configuration can also be adopted in which a flange portion is formed on the tooth portion 20 for accommodating the coil winding which is wound around the outer circumference of the tooth portion 20.

## Claims

1. An axial gap motor stator core, comprising:
a yoke portion comprising a lock portion on a surface of at least one of sides thereof; and
a tooth portion constituting a dust core configured to be locked on the lock portion.

2. The axial gap motor stator core according to claim 1,
wherein the yoke portion has an annular shape, and a plurality of the lock portions are provided thereon.

3. The axial gap motor stator core according to claim 1 or 2,
wherein the lock portion is formed into a projecting shape which can be inserted into a flat plane-shaped lower surface of the tooth portion.

4. An axial gap motor stator core manufacturing method, comprising:
forming a yoke portion including a plurality of projecting portions; and
fixing a tooth portion, constituting a dust core having a flat plane-shaped lower surface, to the yoke portion by inserting the projecting portions into the lower surface of the tooth portion.

5. The axial gap motor stator core manufacturing method according to claim 4,
wherein in fixing the tooth portion to the yoke portion, an adhesive is provided on an abutment surface between the tooth portion and the yoke portion.
